Europäisches Patentamt

(19) European Patent Office

Office européen des brevets

(11) Publication number: **0 091 807**
**B1**

(12) **EUROPEAN PATENT SPECIFICATION**

(45) Date of publication of patent specification: **02.07.86**

(51) Int. Cl.⁴: **C 09 J 7/02, C 09 J 3/14**

(21) Application number: **83302005.0**

(22) Date of filing: **08.04.83**

(54) **Heat-sealing tape.**

(30) Priority: **12.04.82 JP 59787/82**

(43) Date of publication of application:
**19.10.83 Bulletin 83/42**

(45) Publication of the grant of the patent:
**02.07.86 Bulletin 86/27**

(84) Designated Contracting States:
**DE FR GB**

(56) References cited:
**FR-A-2 395 291**
**FR-A-2 409 858**
**US-A-3 658 948**

(73) Proprietor: **Ube Industries, Ltd.**
**12-32, Nishihonmachi 1-chome**
**Ube-shi, Yamaguchi-ken (JP)**

(72) Inventor: **Kuramasu, Tetsuro c/o UBE**
**INDUSTRIES, LTD.**
**Chiba Sekiyu Kagaku Kojyo, 8-1**
**Goiminamikaigan Ichihara-shi Chiba-ken (JP)**
Inventor: **Nakamura, Yukio c/o UBE**
**INDUSTRIES, LTD.**
**Chiba Sekiyu Kagaku Kojyo, 8-1**
**Goiminamikaigan Ichihara-shi Chiba-ken (JP)**
Inventor: **Teshirogi, Susumu c/o UBE**
**INDUSTRIES, LTD.**
**Chiba Sekiyu Kagaku Kojyo, 8-1**
**Goiminamikaigan Ichihara-shi Chiba-ken (JP)**

(74) Representative: **Fisher, Bernard et al**
**Raworth, Moss & Cook 36 Sydenham Road**
**Croydon Surrey CR0 2EF (GB)**

The file contains technical information
submitted after the application was filed and
not included in this specification

Courier Press, Leamington Spa, England.

## Description

### BACKGROUND OF THE INVENTION

#### 1. Field of the invention

The present invention relates to a heat-sealing tape. More particularly, the present invention relates to a heat-sealing tape with a heat-bonding layer formed on a tape substrate.

#### 2. Description of the Prior Art

It is widely known that in order to protect the joints of coated steel pipes usable for transporting crude oil and other lengthy articles from corrosion, the joint portion is covered with a heat-shrinking plastic covering sheet. As a covering sheet, a tube-shaped or annular heat-shrinking plastic sheet can be used. However, from the viewpoint of convenience in handling, most of the covering sheet is in the form of a belt. This belt-shaped sheet has a heat-bonding adhesive layer formed on a surface of a sheet substrate, with which surface the joint portion of the steel pipe or lengthy article is brought into contact. In this case, the belt-shaped covering sheet is wrapped around the joint portion of the steel pipe or another lengthy article, both ends of the belt-shaped sheet are connected to each other to form a ring structure, and the surface of the connected sheet is heated by using a gas burner so as to allow the sheet to heat-shrink and the heat-bonding layer to be heat-bonded to the joint portion. In the heat-shrinkage of the covering sheet, a large heat-shrinking stress is applied to the end-connected portion of the covering sheet. Accordingly, it is necessary that the bonding strength of the end-connected portion of the covering sheet be highly sufficient for resisting the heat-shrinking stress of the covering sheet.

In order to meet the above mentioned necessity both ends of the covering sheet are overlapped on each other and are bonded with an adhesive. However, this bonding method is, in most cases, not satisfactory in respect to the bonding strength of the resultant connected end portions.

In order of enhance the bonding strength of the end portions of the covering sheet, it has been attempted to provide means for the engagement of the end portions with each other. However, preparation of the end portions having the engaging means causes the sheet-producing process to be complicated and costly.

Accordingly, the bonding of the end portions of the band-shaped covering sheet is usually carried out in such a manner that the covering sheet is wrapped around the joint portion of the lengthy pipe or another article so that the end portions of the covering sheet are overlapped. Next, the overlapped portion of the covering sheet is wrapped with a heat-sealing tape having a heat-bonding layer formed on a tape substrate and then the heat-sealing tape is heated so as to heat-bond the overlapped end portions of the covering sheet with the heat-sealing tape.

The heat-sealing tape to be used for the above-mentioned purpose is required to have specific properties. That is, the heat-bonding layer in the heat-sealing tape must have a relatively low softening temperature and must exhibit an effective heat-bonding activity at a relatively low temperature so that the procedure of heat bonding the end portions of the covering sheet with the heat-sealing tape can be completed within a relatively short time period. Also, after the heat-bonding procedure is completed, it is necessary that the bonded heat-sealing tape not be softened at the temperature at which the covering sheet is heat-shrunk on the joint portion of the lengthy pipe or another article, for example, 120°C to 140°C, especially approximately 140°C. Furthermore, it is necessary that the bonded heat-sealing tape be highly resistant to the heat-shrinking stress which serves to rupture the bond of the end portions of the covering sheet.

In other words, the heat-bonding layer in the heat-shrinking tape applied to the end portions of the covering sheet must not be softened or must be only slightly softened at a heat-shrinking temperature of from 120°C to 160°C, especially about 140°C, at which the covering sheet is vigorously shrunk so as to exhibit a high sufficient adhering strength to the end portions of the covering sheet. Also, the heat-bonding layer must be rapidly softened at a temperature slightly higher than the above-mentioned heat-shrinking temperature so as to firmly heat-bond the end portions of the covering sheet therewith.

However, conventional heat-sealing tapes do not satisfy the above-mentioned requirements. The conventional heat-sealing tapes have a heat-bonding layer which can easily bond the end portions of the covering sheet therewith at a relatively low temperature and which is easily softened at the heat-shrinking temperature of the covering sheet to an extent that the softened heat-bonding layer exhibits a poor resistance to the heat-shrinking stress created in the bonded end portions of the covering sheet and, therefore, cannot prevent rupture of the bonded end portions of the covering sheet.

On the other hand, the conventional heat-sealing tape has another type of heat-bonding layer which is not softened or is only slightly softened at the heat-shrinking temperature of the covering sheet. In this case, this type of heat-bonding layer is also not softened or is only slightly softened even at a temperature higher than the heat-shrinking temperature. Accordingly, in order to heat-bond the end portions of the covering sheet with conventional heat-sealing tape, it is necessary to heat the heat-sealing tape to a high temperature or for a long period of time. This necessity results in a poor workability of the heat-sealing tape. Also, the bonded conventional heat-sealing tape exhibits an undesirably high brittleness at a room temperature of from 10°C to 30°C.

There are several approaches for eliminating the above-mentioned disadvantages of the conventional heat-sealing tape. In one approach, the heat-bonding layer is formed from a specific type of heat-bonding polymer composition and then is irradiated with electron beams or is cross-linked with a cross-linking agent. This type of heat-sealing tape exhibits satisfactory softening and bonding properties. However, the necessity of electron beam irradiation or a cross-linking procedure causes the preparation of the heat-sealing tape to be complicated and costly.

United States Patent 3658948 discloses a hot melt adhesive coating composition comprising a maleated polyethylene and an α-mono olefin polymer.

French Patent 2409858 discloses a hot melt composition consisting of a propylene-butylene-1 copolymer and propylene-ethylene copolymer for use with a drawn propylene polymer or copolymer. French Patent 2395291 discloses a modified polyolefin composition comprising a high density polyethylene grafted with an unsaturated fused cyclic carboxylic anhydride and polyethylene, an ethylene α-olefin copolymer or ethylene-α-olefin-diene terpolymer. All these compositions suffer drawbacks as discused before.

## SUMMARY OF THE INVENTION

An object of the present invention is to provide a heat-sealing tape usable for heat-bonding therewith end portions of a covering sheet applied on a lengthy article, which tape has a heat-bonding layer incapable or slightly capable of softening at a temperture at which the covering sheet is highly heat-shrunk and capable of easily softening at a temperature slightly higher than the heat-shrinking temperature.

Another object of the present invention is to provide a heat-sealing tape usable for firmly heat-bonding therewith end portions of a covering sheet applied to a lengthy article.

The heat-sealing tape of the present invention comprises:

a tape substrate and

at least one heat-bonding layer formed on at least one surface of the tape substrate and consisting essentially of a heat-bonding polymer composition comprising:

(A) 100 parts of weight of an ethylene-propylene copolymer containing from 3 to 10 molar % of copolymerized ethylene and having a melt flow index of from 3 to 25 g/10 minutes;

(B) from 20 to 80 parts by weight of a maleic-modified polyethylene having a degree of maleic-modification of from $1 \times 10^{-6}$ to $1.5 \times 10^{-5}$ gram equivalents per gram of the corresponding unmodified polyethylene and a melt flow index of from 0.5 to 10 g/10 minutes;

(C) from 30 to 150 parts by weight of a polyethylene having a melt flow index of from 20 to 100 g/10 minutes;

(D) from 50 to 150 parts by weight of a tackifier; and

(E) from 5 to 20 parts by weight of an inorganic filler.

## DETAILED DESCRIPTION OF THE INVENTION

The specific heat-sealing tape of the present invention comprises a tape substrate and at least one heat-bonding layer formed on at least one surface of the tape substrate and consisting essentially of a specific heat-bonding polymer composition.

The tape substrate usable for the present invention usually comprises a member selected from the group consisting of polyethylene, polypropylene, and ethylene-propylene copolymer sheets and composite sheets comprising at least one of the above-mentioned sheets and at least one reinforcing fibrous sheet laminated on each other.

The tape substrate preferably has a thickness of from 200 to 2,000 microns. The polyethylene, polypropylene, and ethylene-propylene copolymer sheets are preferably either cross-linked ones or undrawn ones. The reinforcing fibrous sheet may be a glass fiber fabric.

The heat-bonding layer consists essentially of a heat-bonding polymer composition comprising five different components, that is, (A) a specific ethylene-propylene copolymer, (B) a specific maleic-modified polyethylene, (C) a specific polyethylene, (D) a tackifier, and (E) an inorganic filler.

The specific ethylene-propylene copolymer component (A) contains from 3 to 10 molar %, preferably from 3 to 7 molar %, of copolymerized ethylene and has a melt flow index of from 3 to 25 g/10 minutes, preferably from 5 to 20 g/10 minutes. The ethylene-propylene copolymer component (A) serves to impart to the heat-bonding layer a resisting property to softening and deformation of the heat-bonding layer due to the heat-shrinking stress applied to the covering sheet at a temperature lower than a temperature at which the covering sheet exhibits a maximum heat shrinkage.

If the content of the copolymerized ethylene in the component (A) is less than 3 molar %, the resultant heat-bonding polymer composition is unsatisfactory in the elasticity thereof which is necessary for an adhesive and exhibits an undesirably high brittleness at a room temperature of, for example, from 10°C to 30°C. If the content of the copolymerized ethylene is greater than 10 molar %, the resultant heat-bonding layer is remarkably softened at a heat-shrinking temperature of the covering sheet to such an extent that the softened heat-bonding layer cannot maintain the firm bond of the end portions of the covering sheet. It is preferable that the component (A) have a melting point, determined by means of differential thermal analysis, of 5°C or more above, preferably from 10°C to 30°C above, the heat-shrinking temperature at which the covering sheet exhibits a maximum heat shrinkage. For example, in the case where the maximum heat-shrinkage temperature of the covering sheet is about 140°C, it is preferable that the ethylene-propylene copolymer component (A) have a melting point in the range of from about 150°C to about 170°C, more preferably from about 155°C to 165°C.

The maleic-modified polyethylene component (B) is prepared by maleic-modifying the corresponding unmodified polyethylene and has a degree of maleic modification of from $1 \times 10^{-6}$ to $1.5 \times 10^{-5}$ gram equivalents per gram of the corresponding unmodified polyethylene and a melt flow index of from 0.5 to 10 g/10 minutes and is used in an amount of from 20 to 80 parts by weight per 100 parts by weight of the ethylene-propylene copolymer component (A). This component (B) is assumed to be effective for imparting a high heat-bonding activity to the resultant heat-bonding polymer composition.

The maleic-modified polyethylene can be prepared by modifying the corresponding unmodified polyethylene with maleic acid or its functional derivative in a solvent consisting of an aromatic hydrocarbon, for example, benzen, toluene or xylene in the presence of a catalyst consisting of an organic peroxide compound, for example, dicumyl peroxide, or benzoperoxide at a temperature between the decomposition temperature of the catalyst and the boiling temperature of the solvent to an extent corresponding to the desired degree of maleic modification in the range of from $1 \times 10^{-6}$ to $1.5 \times 10^{-5}$ gram equivalents per gram of the corresponding unmodified polyethylene and to the desired melt flow index in the range of from 0.5 to 10 g/10 minutes. The maleic-modified polyethylene may be prepared by diluting a highly maleic-modified polyethylene with an unmodified polyethylene. The polyethlene to be maleic-modified and the unmodified polyethylene to be mixed with the highly maleic-modified polyethylene preferably have a melt flow index in the range of from 0.1 to 5 g/10 minutes.

The polyethylene component (C) has a melt flow index of from 20 to 100 g/10 minutes and is used in an amount of from 30 to 150 parts by weight per 100 parts by weight of the ethylene-propylene copolymer component (A). It is assumed that the component (C) is effective for imparting adequate degrees of a heat-softening property and fluidity at a heat-bonding temperature to the resultant heat-bonding layer and, therefore, for obtaining a heat-sealing tape capable of attaining the objects of the present invention.

The tackifier component (D) is used in an amount of from 50 to 150 parts by weight per 100 parts by weight of the ethylene-propylene copolymer component (A). The tackifier usable for the present invention may be optionally selected from those usually used for conventional adhesive compositions. Examples of such conventional tackifiers are rosin and rosin derivatives, for example, glycerol esters of hydrogenated rosin; pinene resins, for example, pinene polymers comprising mainly β-pinene and copolymers of a α-pinene and phenol; hydrocarbon resins, for example, aliphatic hydrocarbon resins such as homopolymers and copolymers of $C_5$ fraction of petroleum, pentenes, isoprene, and 1,3-pentadiene, aromatic hydrocarbon resins such as homopolymers and copolymers of $C_9$ fraction

of petroleum and styrene and derivatives thereof and indene and derivatives thereof, copolymers of aliphatic hydrocarbons and aromatic hydrocarbons, cycloaliphatic hydrocarbon resins, coumarone resins, and coumarone-indene resins; phenolic resins; alkylphenolic resins; and other polymeric materials or oily materials, for example, naphthenic oils and modified terpenes. The above-mentioned materials may be used alone or in the form of a mixture of two or more thereof.

The inorganic filler component (E) is used in an amount of from 5 to 20 parts by weight per 100 parts by weight of the ethylene-propylene copolymer component (A). The inorganic filler usable for the present invention may be optionally selected from those usually used for conventional adhesive compositions. Examples of such conventional inorganic fillers are talc and heavy calcium carbonate.

The heat-bonding polymer composition usable for the present invention comprises the above-mentioned five types of components. The heat-bonding polymer composition may contain, in addition to the above-mentioned five components, any additives as long as they are not adverse to the objects of the present invention. Such additives may be selected from polymers capable of contributing to enhancement of the flexure and elongation at a low temperature of the adhesive composition, for example, SBS (styrene-butadiene-styrene) block copolymers, SIS (styrene-isoprene-styrene) block copolymers, EPR (ethylene-propylene copolymer rubbers), and EPDM (ethylene-propylenediene terpolymers).

The heat-bonding polymer composition mentioned hereinabove exhibits an excellent function as the heat-bonding material for the heat-sealing tape of the present invention serving to bond both end portions of the covering sheet used for covering the joint portion of lengthy articles, particularly coated steel pipes.

The heat-sealing tape of the present invention can be prepared by applying the heat-bonding polymer composition onto at least one surface of the tape substrate of means of a conventional coating method, for example, an extruding method, a doctor coating method, roll coating method, a brush coating method, or a spraying method.

The heat-bonding polymer composition of the present invention is capable of heat-melting and of heat-bonding therewith the covering sheet consisting of a polyolefin, for example, polyethylene, polypropylene, or an ethylene-propylene copolymer. Even when the covering sheet is heat-shrunk at an elevated temperature, the heat-bonding layer of the present invention is not melted or softened, and thus firm bonding of the end portions of the covering sheet with the heat-sealing tape is maintained. However, when the heat-sealing tape is heated to a temperature slightly higher, for example, 5°C or more higher, preferably from 7°C to 25°C higher, than the maximum heat-shrinking temperature of the covering sheet, the heat-bonding layer is easily melted or softened.

Therefore, the heat-sealing tape of the present invention can firmly bond the end portions of the covering sheet therewith at a relatively low temperture slightly higher than the heat-shrinking temperature of the covering sheet within a short period of time. The heat-bonded tape on the covering sheet is highly dimesionally stable at the heat-shrinking temperature of the covering sheet. That is, even when the covering sheet is heated to the heat-shrinking temperature, the bonded end portions of the covering sheet can be prevented from rupturing by the heat-sealing tape of the present invention. Also, the heat-sealing tape of the present invention has an enhanced flexibility (a reduced brittleness). Furthermore, the heat-sealing tape of the present invention can exhibit the above-mentioned excellent properties without electron beam irradiation or a cross-linking treatment having to be applied to the heat-bonding layer thereof.

The specific examples presented below will serve to more fully show how the present invention is practised. However, it should be understood that these examples are only illustrative and in no way limit the scope of the present invention.

### Example 1

(1) Preparation of heat-bonding polymer composition

A heat-bonding polymer composition was prepared by mixing the following components:

(A) 40 parts by weight of an ethylene-propylene copolymer containing 7 molar % of copolymerized ethylene and having a melt flow index of 15 g/10 min and a melting point of from 158°C to 160°C determined by means of differential thermal analysis

(B) 20 parts by weight of a maleic-modified polyethylene having a degree of maleic-modification of $6 \times 10^{-6}$ gram equivalents per gram of the corresponding unmodified polyethylene and a melt flow index of 4 g/10 minutes

(C) 20 parts by weight of a polyethylene having a melt flow index of 50 g/10 minutes

(D) 30 parts by weight of a cycloaliphatic resin type of tackifier and 10 parts by weight of a coumarone resin type of tackifier

(E) 5 parts by weight of talc

(F) 20 parts by weight of an SBS block copolymer

(2) Preparation of tape substrate

A tape substrate was prepared by laminating cross-linked, undrawn polyethylene sheet having a thickness of 0.6 mm on a glass fiber fabric.

(3) Preparation of heat-sealing tape

A heat-sealing tape was prepared by coating a glass fiber fabric layer surface of the tape substrate with 1,000 g/m² of the heat-bonding polymer composition so as to form a heat-bonding layer having a thickness of 1 mm. The heat-bonding property of the resultant heat-sealing tape was tested in the following manner.

A plurality of specimans having a width of 0.5 inches (1.27 cm) and a length of 5 inches (12.7 cm) were provided from a heat-shrinking, cross-linked polyethylene sheet having a thickness of 2 mm, a degree of cross-linking, in terms of a gel fraction, of from 50% to 60%, a maximum heat-shrinking temperature of 140°C, and a heat shrinkage of 50% at 140°C.

A polyethylene sheet speciman was placed on the heat-bonding layer of the heat-sealing tape in such a manner that an end portion of the polyethylene sheet specimen having a length of 2 inches (5.08 cm) was overlapped by the heat-sealing tape. The overlapped portions of the polyethylene sheet specimen and the heat-sealing tape were bonded to each other by heating the overlapped portions at a temperature of $180 \pm 2$°C by means of a heating plate while pressing the overlapped portions under a pressure of 2 psi (0.14 kg/cm²) for 5 minutes. The bonded portion was cooled to room temperature.

The bonding strength of the bonded portion was measured with an Instron-type universal tester at temperatures of 120°C $\pm$ 2°C and 140°C $\pm$ 2°C (the maximum heat-shrinking temperature) at a stretching rate of 12.5 mm/min. The results were as follows:

| | |
|---|---|
| Bonding strength at 120°C | 0.65 kg/cm² |
| Bonding strength at 140°C | 0.25 kg/cm² |

Also, it was found that the lowest temperature at which the overlapped portions of the polyethylene sheet specimen and the heat-sealing tape could be heat-bonded was 150°C and that the embrittlement point of the heat-bonded portion was −3°C.

### Example 2

The same procedures as those dscribed in Example 1 were carried out except that the heat-bonding polymer composition had the following composition:

(A) 50 parts by weight of an ethylene-propylene copolymer containing 3 molar % of copolymerized ethylene and having a melt flow index of 9 g/10 minutes and a melting point of from 158°C to 160°C determined by means of differential thermal analysis

(B) 20 parts by weight of a maleic-modified polyethylene having a degree of maleic-modification of $6 \times 10^{-6}$ gram equivalents per gram of the corresponding unmodified polyethylene and a melt flow index of 4 g/10 minutes

(C) 20 parts by weight of a polyethylene having a melt flow index of 35 g/10 minutes

(D) 30 parts by weight of a cycloaliphatic resin type of tackifier and 10 parts by weight of a coumarone resin type of tackifier

(E) 5 parts by weight of talc

(F) 20 parts by weight of an SBS block copolymer

The bonding property of the resultant heat-sealing tape was as follows:

| | |
|---|---|
| Bonding strength at 120°C | 0.75 kg/cm² |
| Bonding strength at 140°C | 0.35 kg/cm² |

Lowest heat-bonding temperature          152°C
Embrittlement point                      +8°C

### Example 3

The same procedures as those described in Example 1 were carried out except that the heat-bonding polymer composition was composed of the following components:

(A) 40 parts by weight of an ethylene-propylene copolymer containing 3 molar % of copolymerized ethylene and having a melt flow index of 9 g/10 minutes and a melting point of from 158°C to 160°C determined by means of differential thermal analysis

(B) 20 parts by weight of a maleic-modified polyethylene having a degree of maleic modification of $6 \times 10^{-6}$ gram equivalents per gram of the corresponding unmodified polyethylene and a melt flow index of 4 g/10 minutes

(C) 20 parts by weight of a polyethylene having a melt flow index of 50 g/10 minutes

(D) 30 parts by weight of a cycloaliphatic tackifier and 10 parts by weight of a coumarone resin type of tackifier

(E) 5 parts by weight of talc

(F) 20 parts by weight of an SBS block copolymer and 5 parts by weight of EPDM

The results of the tests were as follows:

Bonding strength at 120°C          0.66 kg/cm²
Bonding strength at 140°C          0.27 kg/cm²
Lowest heat-bonding temperature    150°C
Embrittlement point                +6°C

### Example 4

The same procedures as those described in Example 1 were carried out except that the heat-bonding polymer composition was composed of the following components:

(A) 40 parts by weight of an ethylene-propylene copolymer containing 3 molar % of copolymerized ethylene and having a melt flow index of 9 g/10 minutes and a melting point of from 158°C to 160°C determined by means of differential thermal analysis

(B) 20 parts by weight of a maleic-modified polyethylene having a degree of maleic modification of $6 \times 10^{-6}$ gram equivalents per gram of the corresponding unmodified polyethylene and a melt flow index of 4 g/10 minutes

(C) 20 parts by weight of a polyethylene having a melt flow index of 25 g/10 minutes

(D) 30 parts by weight of a cycloaliphatic tackifier and 10 parts by weight of a coumarone resin type of tackifier

(E) 5 parts by weight of talc

(F) 20 parts by weight of an SBS block copolymer

The results of the tests were as follows:

Bonding strength at 120°C          0.92 kg/cm²
Bonding strength at 140°C          0.44 kg/cm²
Lowest heat-bonding temperature    153°C
Embrittlement point                +6°C

### Comparative Example 1

The same procedures as those described in Example 1 were carried out except that the heat-bonding polymer composition was composed of the following components:

(A) 38 parts by weight of an ethylene-propylene copolymer containing 3 molar % of copolymerized ethylene and having a melt flow index of 9 g/10 minutes and a melting point of from 158°C to 160°C determined by means of differential thermal analysis

(B) 38 parts by weight of a maleic-modified polyethylene having a degree of maleic modification of $6 \times 10^{-6}$ gram equivalents per gram of the corresponding unmodified polyethylene and a melt flow index of 4 g/10 minutes

(C) 20 parts by weight of a cycloaliphatic tackifier and 10 parts by weight of a coumarone resin type of tackifier

(D) 10 parts by weight of talc

(E) 25 parts by weight of an SBS block copolymer

The results of the tests were as follows:

Bonding strength at 120°C          0.16 kg/cm²
Bonding strength at 140°C          0.06 kg/cm²
Lowest heat-bonding temperature    160°C
Embrittlement point                +9°C

The heat-bonding polymer composition containing no polyethylene component (C) exhibited a poor fluidity at a bonding temperature of 180°C ± 2°C, and, therefore, the resultant heat-bonding layer exhibited a poor tacking property to the cross-linked polyethylene sheet.

### Comparative Example 2

The same procedures as those described in Example 1 were carried out except that the heat-bonding polymer composition was composed of the following components:

(A) 40 parts by weight of a propylene homopolymer having a melt flow index of 9 g/10 minutes

(B) 20 parts by weight of a maleic-modified polyethylene having a degree of maleic modification of $6 \times 10^{-6}$ gram equivalents per gram of the corresponding unmodified polyethylene and a melt flow index of 4 g/10 minutes

(C) 20 parts by weight of a polyethylene having a melt flow index of 50 g/10 minutes

(D) 10 parts by weight of a cycloaliphatic tackifier and 20 parts by weight of a coumarone resin type of tackifier

(E) 10 parts by weight of talc

(F) 20 parts by weight of an SBS block copolymer

The results of the tests were as follows:

Bonding strength at 120°C          0.50 kg/cm²
Bonding strength at 140°C          0.20 kg/cm²
Lowest heat-bonding temperature    155°C
Embrittlement point                +17°C

## Claims

1. A heat-sealing tape comprising:
a tare substrate and
at least one heat-bonding layer formed on at least one surface of said tape substrate and consisting essentially of a heat-bonding polymer composition comprising:

(A) 100 parts by weight of an ethylene-propylene copolymer containing from 3 to 10 molar % of copolymerized ethylene and having a melt flow index of from 3 to 25 g/10 minutes;

(B) from 20 to 80 parts by weight of a maleic-modified polyethylene having a degree of maleic-modification of from $1 \times 10^{-6}$ to $1.5 \times 10^{-5}$ gram equivalents per gram of the corresponding unmodified polyethylene and a melt flow index of from 0.5 to 10 g/10 minutes;

(C) from 30 to 150 parts by weight of a polyethylene having a melt flow index of from 20 to 100 g/10 minutes;

(D) from 50 to 150 parts by weight of a tackifier; and

(E) from 5 to 20 parts by weight of an inorganic filler.

2. The heat-sealing tape as claimed in claim 1, wherein said tape substrate comprises a member selected from the group consisting of polyethylene, polypropylene, and ethylene-propylene copolymer sheets and composite sheets comprising at least one of the above-mentioned sheets and at least one reinforcing fibrous sheet laminated on each other.

3. The heat-sealing tape as claimed in claim 1, wherein said ethylene-propylene copolymer contains from 3 to 7 molar % of copolymerized ethylene and has a melt flow index of from 5 to 20 g/10 minutes.

4. The heat-sealing tape as claimed in claim 1, wherein said tackifier comprises at least one number selected from the group consisting of rosin, rosin derivatives, pinene resins, hydrocarbon resins, phenol resins alkylphenol resins, naphthenic oils, and modified terpenes.

5. The heat-sealed tape as claimed in claim 1, wherein said inorganic filler comprises talc and/or heavy calcium carbonate.

6. The heat-sealing tape as claimed in claim 1, wherein said heat-bonding polymer composition contains, in addition to said components (A) through (E), an additional material comprising at least one member selected from the group consisting of styrene-butadiene-styrene block copolymers, styrene-isoprene-styrene block copolymers, ethylene-propylene copolymer rubbers, and ethylene-propylene-diene terpolymers.

## Patentansprüche

1. Heißsiegelband mit:
einem Bandsubstrat und
mindestens einer Heißsiegelschicht
auf mindestens einer Oberfläche des Bandsubstrates, die im wesentlichen besteht aus einer Heißsiegel-Polymermasse mit:

(A) 100 Gew.-Tielen eines Ethylen-Propylen-Copolymeren mit 3 bis 10 Mol-% copolymerisiertem Ethylen und einem Schmelzflußindex von 3 bis 25 g/10 Minuten;

(B) 20 bis 80 Gew.-Teilen eines Maleinsäuremodifizierten Polyethylens mit einer Maleinsäure-Modifizierung von $1 \times 10^{-6}$ bis $1,5 \times 10^{-5}$ Gramm-Äquivalenten pro Gramm des entsprechenden unmodifizierten Polyethylens und einem Schmelzflußindex von 0,5 bis 10 g/10 Minuten;

(C) 30 bis 150 Gew.-Teilen eines Polyethylens mit einem Schmelzflußindex von 20 bis 100 g/10 Minuten;

(D) 50 bis 150 Gew.-Teilen eines Klebers und

(E) 5 bis 20 Gew.-Teilen eines anorganischen Füllstoffes.

2. Heißsiegelband nach Anspruch 1, dadurch gekennzeichnet, daß das Bandsubstrat aus einem Glied ausgewählt aus der Gruppe blattförmiger Materialien aus Polyethylen, Polypropylen und einem Ethylen-Propylen-Copolymer und zusammengesetzen blattförmigen Materialien mit mindestens einem der angegebenen blattförmigen Materialien und mindestens einem damit lamineerten verstärkenden faserigen blattförmigen Material aufgebaut ist.

3 Heißsiegelband nach Anspruch 1, dadurch gekennzeichnet, daß das Ethylen-Propylen-Copolymer 3 bis 7 Mol-% copolymerisiertes Ethylen enthält und einem Schmelzflußindex von 5 bis 20 g/10 Minuten aufweist.

4. Heißsiegelband nach Anspruch 1, dadurch gekennzeichnet, daß der Kleber aus mindestens einem Glied ausgewählt aus der Gruppe bestehend aus: Kolophonium-, Kolophoniumderivaten, Pinenharzen, Kohlenwasserstoffharzen, Phenolharzen, Alkyl-phenolharzen, naphthenischen Ölen und modifizierten Terpenn besteht.

5. Heißsiegelband nach Anspruch 1, dadurch gekennzeichnet, daß der anorganische Füllstoff aus Talcum und/oder schwerem Calciumcarbonat besteht.

6. Hießsiegelband nach Anspruch 1, dadurch gekennzeichnet, daß die Heißseigel-Polymermasse zusätzlich zu den Komponenten (A) bis (E) eine zusätzliche Komponente enthält, die aus mindestens einem Glied ausgewählt aus der Gruppe bestehend aus Styrol-Butadein-Styrol-Blockcopolymeren, Styrol-Isopren-Styrol-Blockcopolymeren, Ethylen-Propylen-Copolymergummis und Ethylen-Propylen-Dien-Terpolymeren besteht.

## Revendications

1. Ruban thermoscellab    aractérisé en ce qu'il comprend un substrat du ruban et au moins une couche thermoadhérente formée sur au moins une surface du substrat du ruban et consistant essentiellement en une composition d'un polymère thermo-adhérente comprenant:

(A) 100 parties en poids d'un copolymère éthylène-propylène contenant de 3 à 10 % molaire d'éthylène copolymérisé et ayant un indice de fluidité allant de 3 à 25 g/10 minutes,

(B) de 20 à 80 parties en poids d'un polyéthylène modifié par l'acide maléique ayant un degré de modification par l'acide maléique allant de $1 \times 10^{-6}$ à $1,5 \times 10^{-5}$ grammes équivalents par gramme de polyéthylène non modifié correspondant et un indice de fluidité allant de 0,5 à 10 g/10 minutes;

(C) de 30 à 150 parties en poids d'un polyéthylène ayant un indice de fluidité allant de 20 à 100 g/10 minutes;

(D) de 50 à 150 parties en poids d'une colle; et

(E) de 5 à 20 parties en poids d'une charge minérale.

2. Ruban thermoscellable suivant la revendication 1 caractérisé en ce que le substrat du ruban est constitué par un corps choisi dans le groupe constitué par des feuilles de polyéthylène, de polypropylène et de copolymère éthylène-propylène et des feuilles composites comprenant au moins l'une des feuilles précitées et au moins une feuille fibreuse de renforcement, ces deux feuilles étant stratifiées l'une sur l'autre.

3. Ruban thermoscellable suivant la revendication 1 caractérisé en ce que le copolymère éthylène-propylène contient de 3 à 7 % molaire d'éethylène copolymérisé et il a une indice de fluidité allant de 5 à 20 g/20 minutes.

4. Ruban thermoscellable suivant la revendication 1 caractérisé en ce que la colle est constituée par au moins un corps choisi dans le groupe constitué par la colophane, les dérivés de la colophane, les résines pinène, les résines hydrocarbonées, les résines phénoliques, les résines alkylphénoliques, les huiles naphténiques et les terpènes modifiés.

5. Ruban thermoscellable suivant la revendication 1 caractérisé en ce que la charge minérale est constituée par du talc et/ou du carbonate de calcium lourd.

6. Ruban thermoscellable suivant la revendication 1 caractérisé en ce que la composition de polymère thermo-adhérente contient, en plus des composants (A) à (E), un matériau additionnel constitué par au moins un corps choisi dans le groupe formé par les copolymères et les blocs styrène-butadiène-styrène, les copolymères blocs styrène-isoprène-styrène, les caoutchoucs de copolymère éthylène-propylène et les terpolymères éthylène-propylène-diène.